# EUROPEAN PATENT APPLICATION

(11) **EP 2 150 086 A1**
(43) Date of publication of application: **03.02.2010**
(21) Application number: 09166474.8
(22) Date of filing: 27.07.2009
(51) Int. Cl.: H04W 72/10

(54) **Radio resource allocation based on battery status information of user equipments**

(30) Priority: 28.07.2008 JP 2008193018
(71) Applicant: Fujitsu Ltd., Kawasaki-shi, Kanagawa 211-8588 (JP)
(72) Inventor: Nakagawa, Takao, Kawasaki-shi, Kanagawa 211-8588 (JP); Seki, Hiroyuki, Kawasaki-shi, Kanagawa 211-8588 (JP); Shiizaki, Kotaro, Kawasaki-shi, Kanagawa 211-8588 (JP)
(74) Representative: Wilding, Frances Ward

(57) **Abstract**

A base transceiver station that is communicable with a plurality of user equipments includes a receiving unit that receives battery information of the user equipment, and a controller that controls allocation of radio resources to be used to transmit data addressed to the plurality of user equipments based on the battery information received by the receiving unit.

## Description

### FIELD

The present invention relates to a base transceiver station, a user equipment, a communication method of a base transceiver station, a communication method of a user equipment, and a radio communication system. The present invention may apply to, for example, a radio communication system that has a user equipment and a base transceiver station.

### BACKGROUND

In Long Term Evolution (LTE) that has been progressively standardized by the 3rd Generation Partnership Project (3GPP) and standard specifications such as Worldwide Interoperability for Microwave Access (WiMAX) and the like, radio resources that are usable for radio communication are limited. The radio resources include, for example, a resource in a time axis direction (time slot) and a resource in a frequency axis direction (a frequency resource or a frequency band).

When a plurality of user equipments perform radio communication with a base transceiver station, the base transceiver station may perform optimization of radio resource allocation (scheduling) for each of the user equipments to prevent degradation of communication efficiency. Furthermore, the base transceiver station may select a communication method that is suitable to each of the user equipments. As indexes determining how to allocate the radio resources, there are, for example, a transmission and reception data amount, a Quality of Service (QoS), a transmission environment (quality) between a base transceiver station and user equipment, and/or the number of user equipments desiring transmission and reception with the base transceiver station.

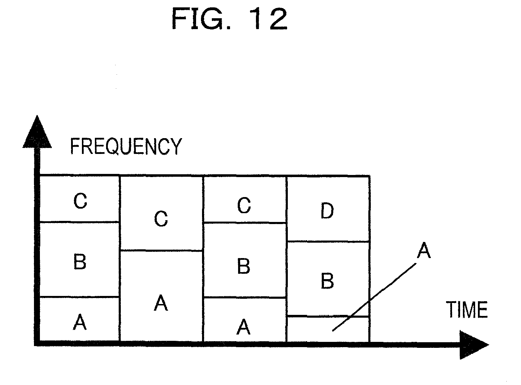

The base transceiver station performs the scheduling illustrated in FIG.12 based on, for example, one or more of the above-described indexes. FIG.12 illustrates an example of the case where the data addressed to mobile terminal A, B and C (user data and control information) is allocated to a two-dimensional radio resource (a communication area), specified by the time slot and the frequency resource, and is then transmitted. For example, Japanese Laid-Open Patent Publication No.2005-341176 and Japanese Laid-Open Patent Publication No.09-205396 disclose techniques for reducing battery consumption of the mobile terminal.

In the conventional technique, radio resource allocation (scheduling) is performed for the user equipments having different remaining battery power amounts on the same standard.
Desirably, the present invention may help to reduce battery consumption of user equipments by allocating radio resources based on battery information of the user equipments.

### SUMMARY

The present invention is defined in the independent claims. Various advantageous aspects and embodiments of the invention are defined in any appended sub-claims.
According to one aspect of the invention, a base transceiver station that is communicable with a plurality of user equipments includes a receiving unit that receives battery information of the user equipment, and a controller that controls allocation of radio resources to be used to transmit data addressed to the plurality of user equipments based on the battery information received by the receiving unit.
It is to be understood that both the foregoing general description and the following detailed description are exemplary and explanatory and are not restrictive of the invention, as claimed.

### BRIEF DESCRIPTION OF DRAWINGS

FIG.1 is a diagram illustrating a configuration example of a radio communication system,
FIGs.2A and 2B are diagrams illustrating an example of scheduling of a base transceiver station illustrated in FIG.1,
FIGs.3A and 3B are diagrams illustrating an example of a reply method of a user equipment illustrated in FIG.1,
FIG.4 is a diagram illustrating an example of parameters used for scheduling,
FIG.5 is a block diagram illustrating a configuration example of the base transceiver station illustrated in FIG.1,
FIG.6 is a block diagram illustrating a configuration example of the user equipment illustrated in FIG.1,
FIG.7 is diagram illustrating an example of the scheduling of the base transceiver station illustrated in FIG.5,
FIG.8 is a diagram illustrating an example of the scheduling of the base transceiver station illustrated in FIG.5,
FIG.9 is a flowchart illustrating an operation example of the base transceiver station illustrated in FIG.5,
FIG.10 is a diagram illustrating an example of a battery information transmitting method,
FIG.11 is a diagram illustrating an example of another battery information transmitting method, and
FIG.12 is a diagram illustrating an example of radio resource scheduling.

### DESCRIPTION OF EMBODIMENT(S)

With reference to the diagrams, description will be made below of an embodiment of the invention.

### [1] First Embodiment

In recent years, in 3GPP, the possibility of effective communication control, performed by reporting the remaining battery power of a user equipment to a base transceiver station by the user equipment, has been discussed. A specific communication control method is not specified at this moment. However, specific communication control methods will be vigorously discussed in the future. In the present embodiment, radio resource allocation (scheduling) based on the remaining battery power of the user equipment is suggested.

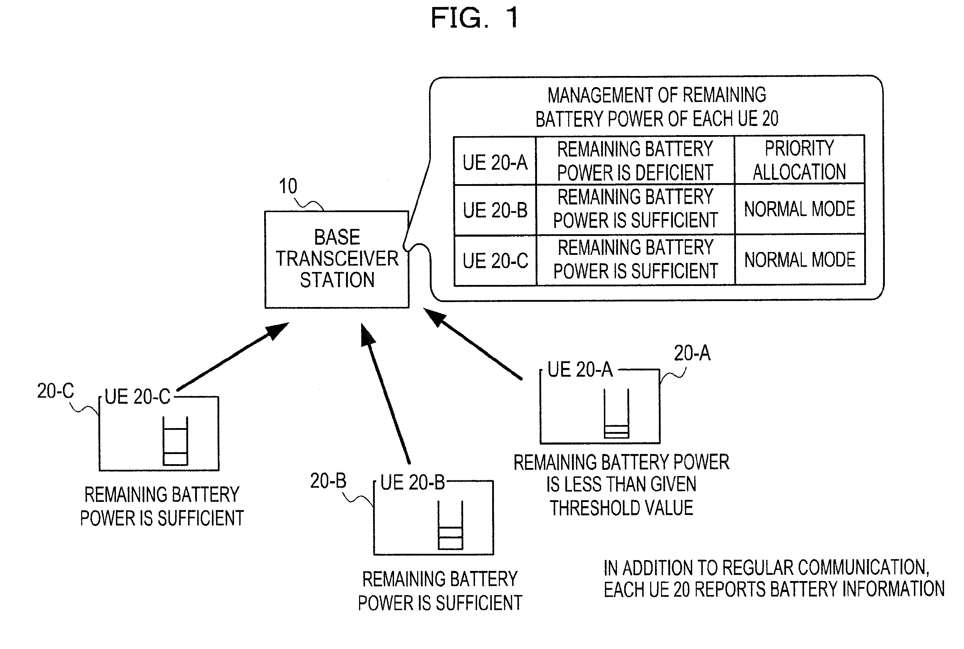

FIG.1 is a diagram illustrating a configuration example of a radio communication system. The radio communication system illustrated in FIG.1 includes, for example, a base transceiver station (sometimes referred to as an "eNodeB" or an "eNB") 10, user equipments (UEs) 20-A, 20-B, and 20-C, which are radio-communicable with the eNB 10. Hereinafter, when the UE 20-A, the UE 20-B, and the UE 20-C are not distinguished from each other, a user equipment is described simply as "UE 20". Furthermore, the number of the UEs 20 and the number of the eNBs 10 are not limited to the numbers illustrated in FIG.1.

A communication direction from the eNB 10 to the UE 20 is called a "downlink" (DL). A communication direction from the UE 20 to the eNB 10 is called an "uplink" (UL). For example, the eNB 10 may perform relaying of data and calls between a higher order device (not illustrated) and the UE 20, and perform communication control. The UE 20 may perform transmission and reception of data and calls. The data may include user data and control information.

The UE 20 receives and processes downlink data from the eNB 10, and then reports a result of the receiving processing to the eNB 10. For example, if the UE 20 receives the downlink data without an error, the UE 20 returns an ACKnowledge (ACK) to the eNB 10. If an error occurs, the UE 20 returns a Not ACKowlegde (NACK) to the eNB 10. If the eNB 10 receives an ACK, the eNB 10 transmits new data addressed to the UE 20. If the eNB 10 receives an NACK, the eNB 10 retransmits the data that caused the error occurrence.

In addition to regular communication, the UE 20 regularly or irregularly reports information related to the amount of the remaining battery power (hereinafter sometimes referred to as "battery information") of the UE 20 itself to the eNB 10. FIG.1 illustrates, the case where, for example, the remaining battery power of the UE 20-A is less than a given threshold value (that is, the remaining battery power is deficient), and the remaining battery power of the UE 20-B and the UE 20-C equals or exceeds the given threshold value (that is, the remaining battery power is sufficient).

The eNB 10 that receives the report of the battery information from each of the UEs 20 manages (monitors) the remaining battery power of each of the UEs 20. For the UE 20-A whose remaining battery power is deficient, the radio resource allocation is performed in such a way that transmission opportunities (timings) of the data addressed to the UE 20-A are decreased to less than the usual number of timings. The usual number of timings means the number of timings when the remaining battery power is equal to or greater than the given threshold value, that is, when the remaining battery power is sufficient.

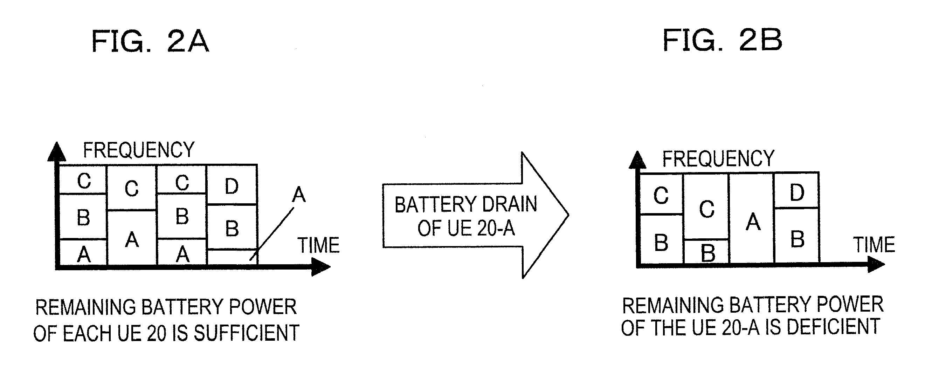

As illustrated in FIG.2A, for example, when the remaining battery power of each of the UE 20-A, the UE 20-B, and the UE 20-C is sufficient, the eNB 10 allocates the radio resources for the downlink data (A, B, and C) addressed to each of the UE 20-A, the UE 20-B, and the UE 20-C in such a way that the radio resources are distributed in a frequency axis direction and a time axis direction. In this example, at a first transmission opportunity, the downlink data A, B, and C are transmitted in different frequencies. At a second transmission opportunity, the downlink data A and C are transmitted in different frequencies. At a third transmission opportunity and a fourth transmission opportunity, the downlink data A, B, and C are transmitted in different frequencies, respectively. That is, focusing on the downlink data A addressed to the UE 20-A, four transmission opportunities are allocated.

Meanwhile, for example, as illustrated in FIG.2B, if the remaining battery power of the UE 20-B and the UE 20-C is sufficient while the remaining battery power of the UE 20-A is deficient, the eNB 10 allocates the radio resources in such a way that the number of the transmission opportunities of the downlink A addressed to the UE 20-A whose remaining battery power is deficient is decreased to be less than the case of FIG.2A. In this example, the eNB 10 allocates frequency resources, distributed and allocated at four transmission opportunities for the downlink data A in FIG.2A, to the downlink data A collectively at the third transmission opportunity.

Therefore, the downlink data A, which is addressed to the UE 20-A, to be distributed and transmitted in four transmission opportunities in FIG.2A is transmitted collectively at the third transmission opportunity. Furthermore, in this case, the radio resources, which were scheduled to be allocated to the downlink data A at a transmission opportunity other than the third transmission opportunity in FIG.2A, may be allocated to the downlink data B and C instead of the downlink data A. That is, at a transmission opportunity other than the third transmission opportunity, the frequency resources to be allocated to the downlink data B and C may be increased. Consequently, the frequency resources, which were scheduled to be allocated to the downlink data B and C at the third transmission opportunity, may be ensured at a transmission opportunity other than the third transmission opportunity.

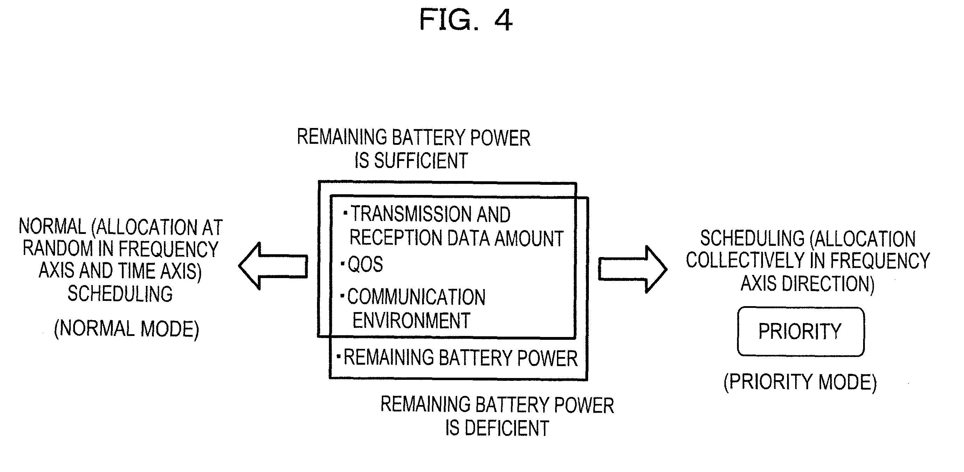

As illustrated in FIG.2A, the scheduling of the case where the remaining battery power of each of the UEs 20 is sufficient is sometimes referred to as "scheduling in a normal mode." As illustrated in FIG.2B, the scheduling where there is an UE 20 whose remaining battery power is deficient is sometimes referred to as "scheduling in a priority mode." Furthermore, the scheduling is repeated in a given unit time (period). In the case of LTE, for example, the unit time may be a Transmission Time Interval (TTI). In the normal mode, for example, as illustrated in FIG.4, the eNB 10 allocates the radio resources based on a transmission and reception data amount, a Quality of Service (QoS), a communication environment (a propagation path quality) between the eNB 10 and the UE 20, the number of the UEs 20 desiring to transmit and receive to and from the eNB 10, and the like.

In the scheduling in the normal mode, for example, as illustrated in FIG.2A, the transmission data A, B, and C addressed to each of the UEs 20 are allocated at random in the frequency axis direction and the time axis direction. On the other hand, in the priority mode, the scheduling is performed with a focus on the remaining battery power rather than the transmission and reception data amount, the QoS, the communication environment, and the like. In the scheduling in the priority mode, for example, as illustrated in FIG.2B, the transmission data A addressed to the UE 20-A whose remaining battery power is deficient is allocated collectively (stacked) in the frequency axis direction.

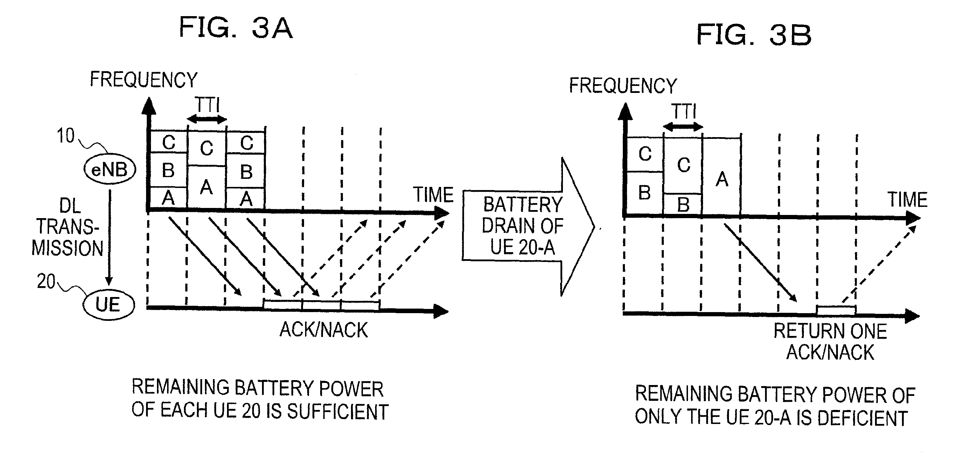

Therefore, the UE 20-A may shorten the receiving processing period of the downlink data A. Furthermore, the UE 20-A may reduce the number of times of transmission of a receiving processing result (ACK/NACK). For example, as illustrated in FIG.3A, if the remaining battery power of each of the UEs 20 is sufficient, there are three transmission opportunities of the downlink data A addressed to the UE 20-A based on the scheduling in the normal mode. The UE 20-A transmits respective reply signals (ACK/NACK) in response to the received data A to the eNB 10.

On the other hand, for example, as illustrated in FIG.3B, if the remaining battery power of the UE 20-A is less than a given threshold value, the eNB 10 performs the scheduling in the priority mode, so that the transmission opportunity of the downlink data A addressed to the UE 20-A is the third transmission opportunity. Accordingly, the UE 20-A just has to transmit the response signal (ACK/NACK) in response to the received data to the eNB 10 one time.

This makes it possible to reduce the battery consumption of the UE 20-A whose remaining battery power is deficient. Moreover, in the priority mode, as for the first and second transmission opportunities, the frequency resource does not have to be allocated to the downlink data A addressed to the UE 20-A. This makes it possible to increase the frequency resource (band) used to transmit the downlink data B and C addressed to the UE 20-B and the UE 20-C whose remaining battery power is sufficient.

Therefore, it is possible to prevent a lack of frequency resources used to transmit the downlink data B and C addressed to the UE 20-B and the UE 20-C respectively by changing the scheduling in the priority mode for the UE 20-A. This makes it possible to ensure the frequency resources, which were scheduled to be allocated to the downlink data B and C at the third transmission opportunity, at a transmission opportunity other than the third transmission opportunity.

### [2] Details of radio communication system

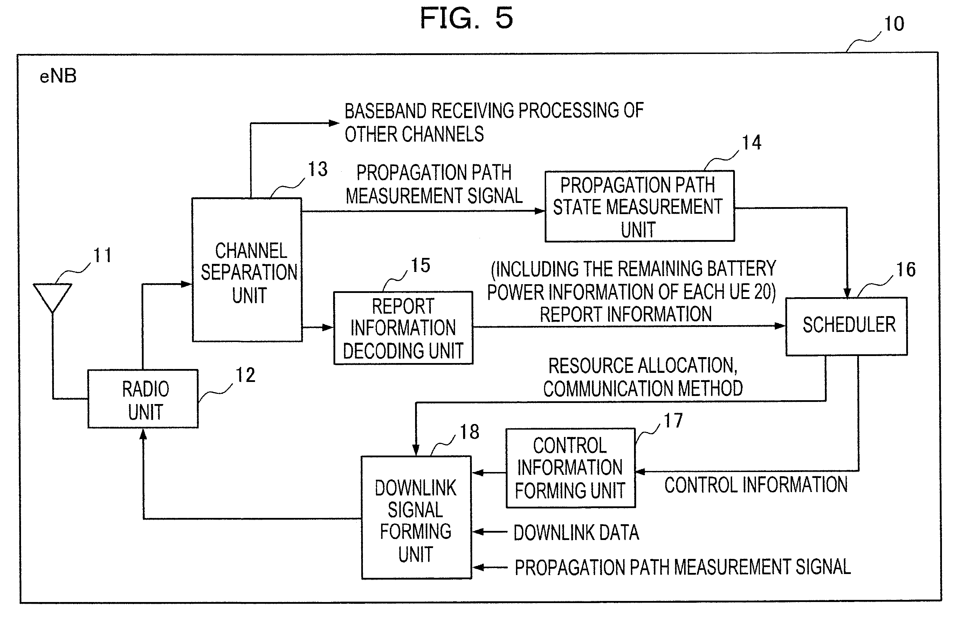

Detailed description will be made below of the above-described radio communication system. (2.1) eNB 10
FIG.5 is a block diagram illustrating an example configuration of an eNB 10 according to an embodiment of the invention. The eNB 10 includes, for example, a transmitting and receiving antenna 11, a radio unit 12, a channel separation unit 13, a propagation path state measurement unit 14, a report information decoding unit 15, a scheduler 16, a control information forming unit 17, and a downlink signal forming unit 18.

The transmitting and receiving antenna 11 is a radio interface that receives an uplink radio signal transmitted from the UE 20 and transmits a downlink signal addressed to the UE 20. Antennas may be provided separately for transmission and reception. The radio unit (RF unit) 12 performs given radio receiving processing on a radio signal received from the UE 20 via the transmitting and receiving antenna 11, and performs given radio transmitting processing on downlink data addressed to the UE 20. The radio receiving processing includes processing such as low-noise amplification of the received radio signal, frequency conversion into a baseband frequency (down-conversion), and AD (analog/digital) conversion. Furthermore, for example, the radio transmitting processing includes processing such as DA (digital/analog) conversion of transmission data addressed to the UE 20, frequency conversion to a radio frequency (up-conversion), and power amplification. Other forms of processing may also be performed by the radio unit 12.

The channel separation unit 13 separates report information (control information) from the UE 20, a propagation path measurement signal, and other channel signals from the received signal to which the given radio receiving processing is applied for each channel. The above-described report information may include, for example, an ACK/NACK signal, and a CQI (Channel Quality Indicator) indicating reception quality in the UE 20. In the present embodiment, the above-described report information includes numeric information indicating the remaining battery power (sometimes referred to as "remaining battery power information" or "battery information") of each of the UEs 20. This report information is channel-separated by the channel separation unit 13 and is then transmitted to the report information decoding unit 15.

Furthermore, the above-described propagation path measurement signal is a known signal that is sometimes referred to as, for example, a "pilot signal", a "reference signal" (RS), or the like. The above-described propagation path measurement signal is channel-separated by the channel separation unit 13 and is then transmitted to the propagation path state measurement unit 14. The above-described other signals include a signal of a control channel used to transmit other control information, a signal of a data channel used to transmit user data, and the like. The channel signal is channel-separated by the channel separation unit 13 and is then transmitted to a receiving processing unit (not illustrated) according to each channel type. Then the channel signal is subject to various baseband receiving processing.

The propagation path state measurement unit (propagation path measurement unit) 14 measures an uplink propagation path state between the eNB 10 and the UE 20 based on the propagation path measurement signal transmitted from the channel separation unit 13. For example, the propagation path state measurement unit 14 may measure the uplink propagation path state (propagation path quality) by comparing the propagation path measurement signal received from the UE 20 through the uplink propagation path and a replica of such a signal. For example, the eNB 10 can estimate (detect) the uplink propagation path quality based on the CQI.

The report information decoding unit 15 decodes the report information received from the UE 20. As described above, this report information includes the battery information indicating the remaining battery power of each of the UEs 20. That is, the transmitting and receiving antenna 11, the radio unit 12, the channel separation unit 13, and the report information decoding unit 15 are an example of the receiving unit that receives the UE 20 battery information from the plurality of UEs 20.

For example, the uplink propagation path quality obtained by the above-described propagation path state measurement unit 14 (or the downlink propagation path quality received from the UE 20) and the battery information obtained by the above-described report information decoding unit 15 are transmitted to the scheduler 16. The scheduler (controller) 16 uses the propagation path quality measured by the propagation path state measurement unit 14 and the above-described battery information received from the UE 20 as scheduling parameters. The scheduler 16 performs allocation (scheduling) of the radio resources (frequency and time slot) that are used to transmit the downlink data. Results of the scheduling may be notified to the UE 20. By receiving this notification, the UE 20 recognizes which frequency and which time slot the downlink data addressed to the UE 20 itself is transmitted in. The UE 20 may perform receiving processing of the downlink data appropriately in the recognized frequency and time slot. For this notification, for example, a control channel of downlink may be used. In this case, the control information forming unit 17 is notified of the above-described scheduling result as one of the control information items of the downlink.

For example, the scheduler 16 controls the decrease of the transmission opportunities of the downlink data addressed to the UE 20 whose remaining battery power is less than a given threshold value. At this time, the scheduler 16 may also increase the frequency resource in such transmission opportunities. As the frequency resource is increased, the frequency resource to be allocated to the downlink data addressed to another UE 20 may be increased at another transmission opportunity.

The transmission opportunity in which the propagation path quality measured by the propagation path state measurement unit 14 is a given quality or better may be chosen as the transmission opportunity for the downlink data addressed to the UE 20 whose remaining battery power is less than the given threshold value. Therefore, even though the transmission opportunity of the data addressed to the UE 20-A whose remaining battery power is deficient is decreased, it is possible to reduce if not prevent degradation of the success probability of reception by the UE 20-A.

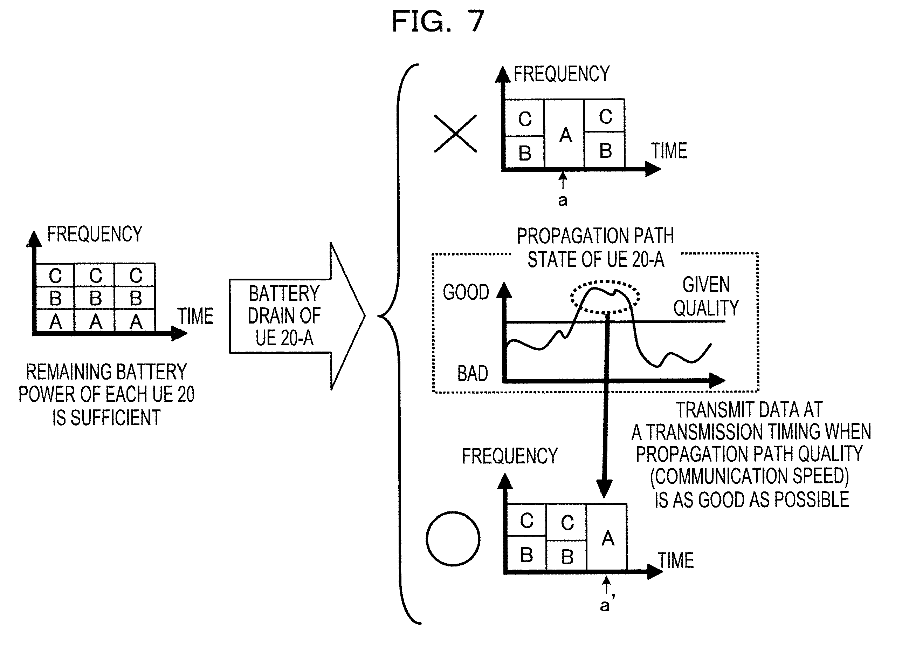

For example, even though the transmission frequency of the data addressed to the UE 20-A whose remaining battery power is deficient is decreased by the scheduling in the priority mode, the eNB 10 retransmits the data after receiving a NACK if the data does not arrive at the UE 20-A properly. As a result, the reception frequency of the UE 20-A is not decreased, and the battery consumption amount may not be reduced. As illustrated in FIG.7, when the scheduler 16 performs the scheduling in the priority mode because of battery drain of the UE 20-A, the scheduler 16 may determine, based on the above-described propagation path quality, the transmission opportunity (timing) of the downlink data addressed to the UE 20-A to be a timing when the propagation path quality is better than the propagation path quality of other transmission opportunities.

For example, in a scheduling period, the scheduler 16 attempts to allocate a transmission timing, indicated by the sign "a" in FIG.7, to the downlink data addressed to the UE 20-A. At this time, based on the measurement result from the propagation path state measurement unit 14, the scheduler 16 detects that the downlink propagation path quality between the eNB 10 and the UE 20-A at this transmission timing (the timing indicated by the sign "a") is less than the given quality.

Then the scheduler 16 determines that this transmission timing should not be the transmission timing of the downlink data addressed to the UE 20-A. The scheduler 16 has a transmission timing in which the propagation path quality between the eNB 10 and the UE 20-A is the given quality or better. In the example illustrated in FIG.7, the scheduler 16 detects that the propagation path quality at the transmission timing indicated by a sign "a'" has the above-described given quality or more based on the measurement result by the propagation path state measurement unit 14.

Then the scheduler 16 performs scheduling to transmit the data addressed to the UE 20-A at the transmission timing indicated by the sign "a'." As described above, the eNB 10 may wait for a timing in which the propagation path quality (communication quality) is as good as possible (the transmission timing indicated by the sign "a'" in FIG.7) to perform scheduling to transmit the data addressed to the UE 20-A. Consequently, the battery consumption of the UE 20-A may be reduced by decreasing an occurrence rate of retransmission.

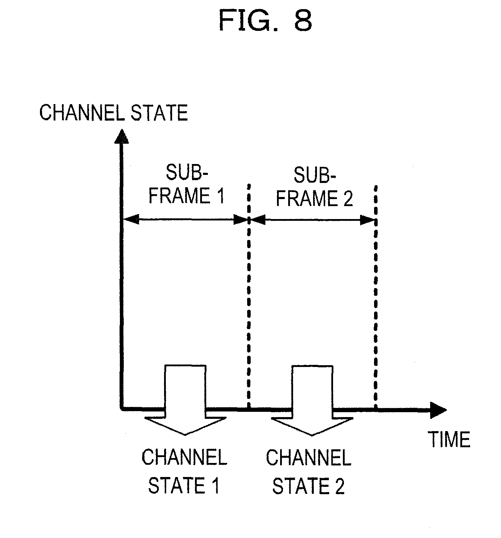

As illustrated in FIG.8, the propagation path state measurement unit 14 may, for example, measure the propagation path quality (channel state) for each sub-frame included in the radio resource. In the example illustrated in FIG.8, as for the UE 20-B and the UE 20-C whose remaining battery power is the given threshold value or more, for example, the scheduler 16 may perform scheduling to allocate one sub-band (divided band) to one sub-frame.

On the other hand, as for the UE 20-A whose remaining battery power is less than the above-described given threshold value, the channel state of each sub-frame is measured by the propagation path state measurement unit 14. Then the scheduler 16 may allocate two sub-bands collectively to a sub-frame having a better channel state based on each channel state measurement result. For example, if the quality of a channel state 1 is better than that of a channel state 2, the scheduler 16 allocates two sub-bands collectively to a sub-frame 2.

As described above, as for the UE 20-A whose remaining battery power is deficient, the scheduler 16 may perform scheduling to allocate two sub-bands collectively to the sub-frame 2 at one time. On the other hand, as for the UE 20-B and the UE 20-C whose remaining battery power is sufficient, the scheduler 16 may perform scheduling to allocate one sub-band to a sub-frame 1 at one time, respectively.

The scheduler 16 may perform substantially the same communication control in the next period (two sub-frames later) if every channel state is less than the given threshold value. As described above, the scheduler 16 may increase the success probability of the communication even though the data transmission frequency to the UE 20-A, whose remaining battery power is deficient, is decreased as much as possible by performing the scheduling according to the aggregation path quality.

When the battery information received from the UE 20-A recovers to the given threshold value or more, the scheduler 16 may increase the transmission opportunity of the downlink data addressed to the UE 20-A or may decrease the frequency resources that have been allocated until then. The battery information may be recovered by, for example, charging a battery 26. The scheduler 16 may select an effective communication method based on, for example, the transmission and reception data amount, the Quality of Service (QoS), the propagation path quality between the eNB 10 and the UE 20, and/or the number of the UEs 20 desiring transmission and reception to and from the eNB 10. The information related to the radio resource allocation and the communication method that are determined by the scheduler 16 are transmitted to, for example, a downlink signal forming unit 18.

The control information forming unit 17 forms a scheduling result (information related to the radio resource allocation) from the scheduler 16. Based on the scheduling result from the scheduler 16 and the like, the downlink signal forming unit 18 allocates the above-described control information, the downlink data addressed to the UE 20, and the like to the downlink radio resource (mapping).

In this manner, the downlink signal formed by the downlink signal forming unit 18 is radio-transmitted to the UE 20 through the above-described radio unit 12 and the above-described transmitting and receiving antenna 11. As described above, the eNB 10 receives each battery information from the plurality of UEs 20, and then controls the allocation of the radio resource (scheduling) to be used to transmit the data addressed to the plurality of UEs 20 based on the battery information.

This allows the eNB 10 to perform the scheduling according to the remaining battery power of the UE 20. Thus, the battery consumption of the UE 20 may be reduced.

### (2.2) Operation example of eNB 10

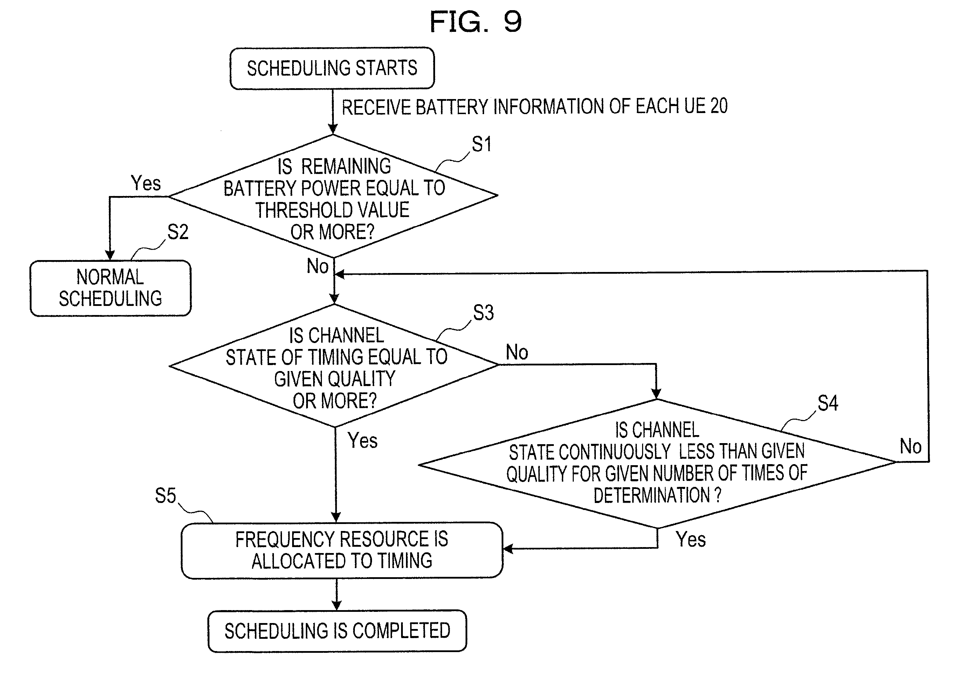

Next, description will be made of the above-described operation example (the communication control method) of the eNB 10 by using FIG.9. As illustrated in FIG.9, when data scheduling addressed to each of the UEs 20 is started by the eNB 10, the eNB 10 receives battery information (remaining battery power value) from each of the UEs 20 regularly or irregularly.

Then the eNB 10 determines whether the remaining battery power is equal to a given threshold value or more (step S1). When the eNB 10 determines that the remaining battery power is equal to the given threshold value or more (Yes in step S1), the scheduler 16 performs the above-described scheduling in the normal mode (step S2).

On the other hand, when the eNB 10 determines that there is a UE 20 whose remaining battery power is less than the above-described threshold value (No in step S1), the scheduler 16 performs the above-described scheduling in the priority mode. At this time, the propagation path state measurement unit 14 determines whether the propagation path quality (channel state) is a given quality or better (step S3).

If the channel state is determined to be the above-described given quality or better (Yes in step S3), the scheduler 16 determines that the communication state at the transmission timing according to the scheduling is good. Then the scheduler 16 collectively allocates the frequency resources to the downlink data addressed to the UE 20-A at this transmission timing (step S5). On the other hand, if the above-described channel state is determined to be less than the above-described given quality (No in step S3), the scheduler 16 again determines whether the channel state is the given quality or better in the next scheduling period.

However, when the channel state stays below the above-described quality for a while, the data addressed to the UE 20-A may not be transmitted indefinitely. Thus, in the present embodiment, for example, the scheduler 16 determines whether the number of times a determination is made of whether the channel state is equal to or better than the above-described given quality is a given number of times or more (step S4).

If the scheduler 16 determines that the above-described number of times a determination is made is the given number or more (Yes in step S4), the scheduling is performed in such a way that the frequency resources are collectively allocated to the data addressed to the UE 20-A regardless of the channel state (step S5). On the other hand, if the scheduler 16 determines that the above-described number of times a determination is made is not the given number of times or more (No in step S4), the scheduler 16 again determines whether or not the channel state is equal to or better than the given quality in the next scheduling period (step S3).

That is, when the channel state is measured to be less than the given quality by the propagation path state measurement unit 14 for a given period (number of times), the scheduler 16 may allow execution of the scheduling even though the channel state is less than the given quality. In the communication control method of the present embodiment, for example, when the remaining battery power of the UE 20-A recovers to the given threshold value or more, the scheduler 16 may perform scheduling to increase the transmission opportunities of the downlink data addressed to the UE 20-A. The scheduler 16 may also decrease the frequency resources allocated to the downlink data addressed to the UE 20-A.

That is, when the scheduler 16 detects the recovery of the remaining battery power of the UE 20, the scheduler 16 may return from scheduling in the priority mode to scheduling in the normal mode. The scheduler 16 may maintain the above-described scheduling in the priority mode with respect to the UE 20-A when the remaining battery power of the UE 20-A stays less than the above-described given threshold value.

In this case, the battery consumption of the UE 20-A whose remaining battery power is deficient is effectively reduced. However, the remaining battery power may be intentionally kept to less than the above-described given threshold value by the user of the UE 20-A. This affects the scheduling of the downlink data addressed to the UE 20-B and the UE 20-C. Considering this case, for example, when the scheduling in the priority mode continues for a given period (or a given number of times) with respect to a UE 20, the scheduler 16 may forcibly return from scheduling in the priority mode to scheduling in the normal mode. To measure the above-described period (or the number of times), a counter may be used, for example.

The above-described period (the number of times) may be changed accordingly to, for example, communication traffic of the eNB 10 and the UE 20 or to the number of the UEs 20 desiring to be connected to the eNB10. In such a communication control method, the scheduling may be returned to scheduling in the normal mode when the remaining battery power of the UE 20 recovers. According to this communication control method, the effect on other UEs 20 may be reduced when the remaining battery power is intentionally kept to less than the given threshold value by the user.

In the communication control method of the present embodiment, for example, when the battery of a UE 20 runs out (that is, when the remaining battery power is zero percent), the UE 20 may be excluded from the target of scheduling. As described above, the eNB 10 receives each battery information from a plurality of UEs 20 and controls the scheduling of the downlink data addressed to each of the UEs 20 based on the battery information. This may reduce the battery consumption of the UEs 20.

### (2.3) UE 20

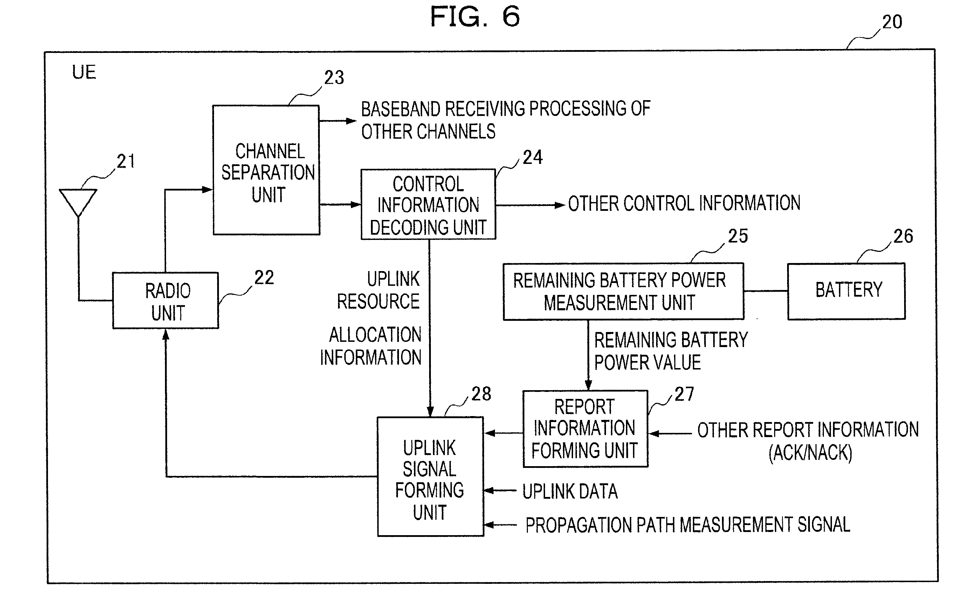

FIG.6 is a block diagram illustrating a configuration example of a UE 20 according to an embodiment. The UE 20 illustrated in FIG.6 includes, for example, a transmitting and receiving antenna 21, a radio unit 22, a channel separation unit 23, a control information decoding unit 24, a remaining battery power measurement unit 25, a battery 26, a report information forming unit 27, and an uplink signal forming unit 28.

The transmitting and receiving antenna 21 is a radio interface that receives a downlink radio signal transmitted from the eNB 10 and transmits an uplink radio signal addressed to the eNB 10. The antennas may be provided for transmission and reception, separately. The radio unit (RF unit) 22 performs given radio receiving processing on a radio signal received from the eNB 10 via the transmitting and receiving antenna 21, and at the same time the radio unit 22 performs given radio transmitting processing on uplink data to be transmitted to the eNB 10. The above-described radio receiving processing includes processes, for example, of low-noise amplification of the received radio signal, frequency conversion into a baseband frequency (down-conversion), and AD (analog/digital) conversion, and the like. Furthermore, the above-described radio transmitting processing includes processes, for example, of DA conversion of the transmission data addressed to the UE 20, frequency conversion into a radio frequency (up conversion), power amplification, and the like.

From the received signal that has been subjected to the given radio receiving processing by the radio unit 22, the channel separation unit 23 separates the control information received from the eNB 10 and other channel signals for each channel. The above-described control information includes, for example, an ACK/NACK signal, a CQI indicating a reception quality in the eNB 10, a propagation path measurement signal, and the like. In the present embodiment, the control information includes the scheduling result from the eNB 10. This control information is channel-separated by the channel separation unit 23 and is then transmitted to the control information decoding unit 24.

The above-described propagation path measurement signal is a known signal referred to as, for example, a pilot signal, a reference signal (RS), or the like. The above-described propagation path measurement signal is channel-separated by the channel separation unit 23 and is then transmitted to a processing unit (not illustrated) that measures a propagation path state. The above-described other channel signals include a signal of a control channel used to transmit other control information, a signal of a data channel used to transmit user data, and the like. Such channel signals are channel-separated by the channel separation unit 23 and are then transmitted to a receiving processing unit (not illustrated) according to each channel type to be subject to various baseband receiving processing.

The control information decoding unit 24 decodes the control information received from the eNB 10. As described above, this control information includes the scheduling result (uplink resource allocation information) from the eNB 10. This uplink resource allocation information is transmitted to the uplink signal forming unit 28. As described above, the transmitting and receiving antenna 21, the radio unit 22, and the channel separation unit 23 are used as an example of a data receiving unit that receives data from the eNB 10 by using the radio resource allocated by the eNB 10 based on the battery information of the UE 20.

A battery 26 supplies electric power to the UE 20. As the battery 26, for example, a primary battery (dry cell battery), a secondary battery (storage battery), a chemical battery such as a fuel battery or a biological battery, or a physical battery such as a photo-cell or a thermal battery may be used. In this document, all forms of battery and all other methods and means of electrical storage for supplying the UE 20 with electric power are included within the meaning of "battery". The remaining battery power measurement unit 25 measures the remaining battery power value of the battery 26. The measured remaining battery power value (battery information) is sent to the report information forming unit 27.

The report information forming unit 27 forms report information to be sent to the eNB 10. The report information includes the above-described battery information, the information of ACK/NACK and CQI, and the like. That is, the report information forming unit 27, the uplink signal forming unit 28, the radio unit 22, and the transmitting and receiving antenna 21 are used as a response signal transmitting unit that transmits, to the eNB 10, an ACK/NACK as a response signal to the downlink data received from the eNB 10.

Based on the uplink resource information from the control information decoding unit 24, the uplink signal forming unit 28 allocates (maps) the above-described report information, the uplink data, the uplink propagation path measurement signal, and the like to the uplink radio resource. In this manner, the uplink signal formed by the uplink signal forming unit 28 is transmitted to the eNB 10 through the above-described radio unit 22 and the transmitting and receiving antenna 21.

That is, the remaining battery power measurement unit 25, the report information forming unit 27, the uplink signal forming unit 28, the radio unit 22, and the transmitting and receiving antenna 21 are used as a transmitting unit that transmits the battery information of the UE 20 itself to the eNB 10. As described above, the UE 20 transmits the battery information of the UE 20 itself to the eNB 10, and then receives the data from the eNB 10 by using the radio resource allocated by the eNB 10 based on the above-described battery information.

The UE 20 may, for example, regularly report the above-described battery information to the eNB 10. Consequently, the eNB 10 may regularly confirm the remaining battery power of each of the UEs 20. Thus, the scheduling according to the remaining battery power may be adaptively performed. However, in this case, even an UE 20 that is connected to the eNB 10 but not scheduled to communicate with the eNB 10 regularly reports the battery information to the eNB 10 as well. As a result, if the period of reporting is short, for example, the battery consumption of the UE 20 may not be able to be reduced.

Therefore, the UE 20 may include the above-described battery information in a control signal addressed to the eNB 10 and report the control signal to the eNB 10. Accordingly, the timings to report the battery information may be decreased to the minimum number of times. Thus, the battery consumption of the UE 20 may be reduced more effectively. Furthermore, the battery information is included in the control signal addressed to the eNB 10. This makes it possible to reduce changes to the device configurations of the eNB 10 and the UE 20.

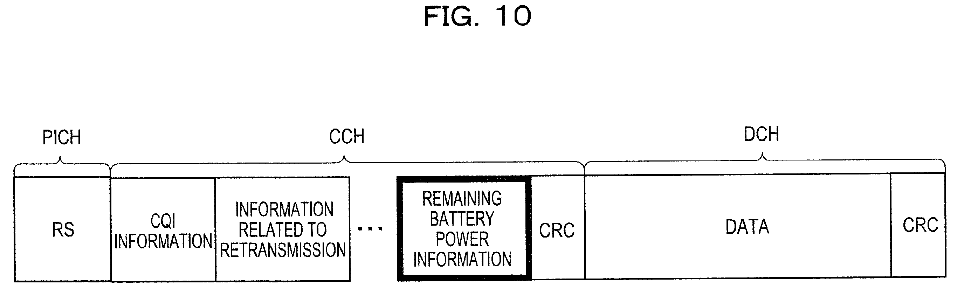

Furthermore, for example, if the remaining battery power of the UE 20 itself is less than the given threshold value, the UE 20 may include the battery information in the control signal addressed to the eNB 10 and report the control signal to the eNB 10. Accordingly, the battery consumption, required when the UE 20 reports the battery information, may be reduced. FIG. 10 illustrates an example of a transmission frame format used to include the battery information in the control information. In FIG.10, "PICH" indicates a Pilot Channel, "CCH" indicates a Control Channel, and "DCH" indicates a Data Channel.

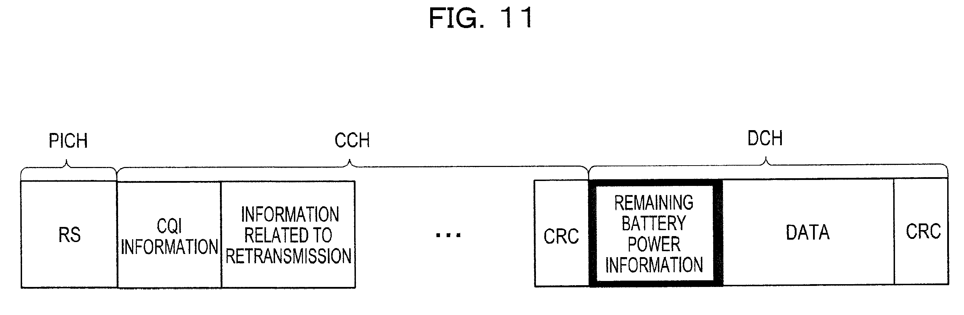

As illustrated in FIG.10, by newly adding an item (area) indicating the remaining battery power information to the control channel of the transmission frame, the UE 20 may include the battery information (the remaining battery power information) in the control channel and transmit the control channel. However, by newly adding an item indicating the battery information to the data channel of the transmission frame, as illustrated in FIG.11, the UE 20 may, for example, include the battery information in the data channel and transmit the data channel. In this case, a position of the battery information may become known information (for example, three bits from the head of a data channel) according to the eNB 10 and the UE 20.

As described above, the UE 20 reports the battery information of the UE 20 itself to the eNB 10. This allows the eNB 10 to perform the scheduling of the radio resource according to the battery information from the UE 20. For example, the eNB 10 performs scheduling to decrease the transmission timings of the data addressed to the UE 20 whose remaining battery is deficient. This allows the UE 20 to decrease the number of times of transmission of the response signal addressed to the eNB 10. As a result, the UE 20 may reduce the battery consumption.

Each of the above-described configurations and processing of the eNB 10 and the UE 20 may be chosen as desired or may be combined arbitrarily. The above-described example explained the case where the UE 20 transmits a response signal in response to the downlink data from the eNB 10. If the UE 20 transmits the response signal in response to the data scheduled by the eNB 10, the similar effect as the above may be obtained.

The above-described example explained the case where the above-described communication control is performed in the eNB 10 and the UE 20. The above-described communication control may be performed by other configuration entities of the radio communication system. For example, each of the configurations and processes of the eNB 10 and the UE 20 may be distributed and allocated in the radio communication system. Furthermore, each of the configurations and processes of the eNB 10 and the UE 20 may be allocated to one device (for example, to the eNB, the UE, or the radio base transceiver station control device).

The above-described example explained the case where the UE 20 includes the battery information in the control channel or the data channel and reports the control channel or the data channel to the eNB 10. However, the battery information may be included in various areas of another transmission frame format. For example, the above-described battery information may be included in a message unit either of a preamble unit or a message unit included in a Random Access Channel (RACH) used to start to communicate with the eNB 10.

The above-described example explained the case of applying the above-described scheduling to the communication in the downlink direction. The above-described scheduling may be applied to the communication in the uplink direction.

In the above-described embodiment, the battery consumption of the user equipment may be reduced.

In the above description, where applicable, the various features and components described may be implemented in hardware, or as software modules running on one or more processors. Features of one aspect may be applied to any of the other aspects.
There may also be provided a computer program or a computer program product for carrying out any of the methods described above, and a computer readable medium having stored thereon a program for carrying out any of the methods described. A computer program embodying the invention may be stored on a computer-readable medium, or it could be, for example, in the form of a signal such as a downloadable data signal provided from an Internet website, or it could be in any other form.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A base transceiver station that is communicable with a plurality of user equipments, the base transceiver station comprising:
a receiving unit that receives battery information that indicates battery power amount of the user equipment, and
a controller that controls allocation of radio resources to be used to transmit data addressed to the plurality of user equipments based on the battery information received by the receiving unit.

2. The base transceiver station according to claim 1, wherein the radio resource includes a plurality of transmission timings, and wherein the controller decreases the number of transmission timings of the data addressed to the user equipment whose the battery power amount is less than a given threshold value.

3. The base transceiver station according to claim 2, wherein the radio resource includes a frequency resource, and wherein the controller increases the frequency resource to be used to transmit the data addressed to the user equipment whose the battery power amount is less than the given threshold value.

4. The base transceiver station according to claim 2 or claim 3, wherein the base transceiver station includes a propagation path measurement unit that measures a propagation path quality between the propagation path measurement unit and the user equipment, and wherein the controller chooses a transmission timing in which the propagation path quality measured by the propagation path measurement unit is equal to or greater than a given quality as a transmission timing of the data addressed to the user equipment whose the battery power amount is less than the given threshold value.

5. The base transceiver station according to claim 4, wherein the controller allows selection of the transmission timing in which the propagation path quality is less than the given quality when the propagation path measurement unit measures that the propagation path quality is less than the given quality for a given period.

6. The base transceiver station according to one of claim 2, 3, 4, or 5,
wherein the controller increases, according to the decrease in the number of transmission timings, the frequency resource to be used to transmit the data addressed to the user equipment whose the battery power amount is equal to or higher than the given threshold value.

7. The base transceiver station according to one of claim 2, 3, 4, 5, or 6,
wherein the controller increases the number of transmission timings of the data addressed to the user equipment whose the battery power amount recovers to the given threshold value or more.

8. The base transceiver station according to claim 3, wherein the controller decreases the frequency resource to be used to transmit the data addressed to the user equipment whose the battery power amount recovers to the given threshold value or more.

9. A user equipment that is communicable with a base transceiver station, comprising:
a transmitting unit that transmits battery information that indicates battery power amount of the user equipment itself to the base transceiver station, and
a data receiving unit that receives data from the base transceiver station by using a radio resource allocated by the base transceiver station based on the battery information.

10. The user equipment according to claim 9, further comprising a response signal transmitting unit that transmits a response signal to the base transceiver station in response to the data received by the data receiving unit.

11. The user equipment according to claim 9 or claim 10, wherein the transmitting unit includes the battery information a signal of a control channel or a signal of a data channel and transmits the signal.

12. A communication control method of a base transceiver station that is communicable with a plurality of user equipments, wherein the communication control method comprises:
receiving battery information that indicates battery power amount of the user equipment, and controlling allocation of a radio resource to be used to transmit data addressed to the plurality of user equipments based on the battery information.

13. A communication control method of a user equipment that is communicable with a base transceiver station, wherein the communication control method comprises:
transmitting the battery information of the user equipment to the base transceiver station, and
receiving data from the base transceiver station by using a radio resource allocated by the base transceiver station based on the battery information.

14. A radio communication system comprising:
a base transceiver station that is communicable with a plurality of user equipments, and a user equipment that is able to communicate with the base transceiver station;
wherein the base transceiver station comprises:
a receiving unit that receives battery information that indicates battery power amount of the user equipment, and
a controller that controls allocation of a radio resource to be used to transmit data addressed to the plurality of user equipments based on the battery information received by the receiving unit; and
wherein the user equipment comprises:
a transmitting unit that transmits the battery information to the receiving unit, and
a data receiving unit that receives the data by using the radio resource allocated by the controller.
